# EUROPÄISCHE PATENTSCHRIFT

(11) **EP 2 603 869 B1**
(45) Veröffentlichungstag und Bekanntmachung des Hinweises auf die Patenterteilung: **07.09.2016**
(21) Anmeldenummer: 11755280.2
(22) Anmeldetag: 19.07.2011
(51) Int. Cl.: B21D 5/08, G06F 17/50, B21D 5/00

(54) **VERFAHREN ZUR ERZEUGUNG VON OPTIMIERTEN, KRÜMMUNGSSTETIGEN 2D- BZW. 3D- WALZPROFILVERLÄUFEN UND ENTSPRECHENDE VORRICHTUNG**
METHOD AND SYSTEM FOR GENERATING OPTIMIZED CONTINUOUS CURVATURE 2D AND 3D ROLLING PROFILES
PROCÉDÉ ET DISPOSITIF DE GÉNÉRATION DES PROFILES DE LAMINAGE OPTIMISÉES À COURBURE CONTINUE

(30) Priorität: 11.08.2010 DE 102010036945
(43) Veröffentlichungstag der Anmeldung: 19.06.2013
(73) Patentinhaber: Data M Sheet Metal Solutions GmbH, 83636 Valley/Oberlaindern (DE)
(72) Erfinder: SEDLMAIER, Albert, 83714 Miesbach (DE); FREITAG, Stefan, 82054 Sauerlach (DE); POKS, Bernard, 85354 Freising (DE); HENNIG, Roland, 83684 Tegernsee (DE)
(74) Vertreter: Farago, Peter Andreas
(86) Internationale Anmeldenummer: PCT/EP2011/062325
(87) Internationale Veröffentlichungsnummer: WO 2012/019885

(56) Entgegenhaltungen:
- DE-A1-102007 024 777
- HAUGER A ET AL: "FLEXIBLES WALZEN VON TAILER ROLLED BLANKS//FLEXIBLE ROLLING OF TAILOR ROLLED BLANKS", STAHL UND EISEN, VERLAG STAHLEISEN, DUSSELDORF, DE, Bd. 126, Nr. 5, 1. Januar 2006 (2006-01-01), Seiten 21-23, XP001245875, ISSN: 0340-4803
- KOPP ET AL: "A New Rolling Process for Strips with a Defined Cross Section", CIRP ANNALS, ELSEVIER BV, NL, CH, FR, Bd. 52, Nr. 1, 1. Januar 2003 (2003-01-01) , Seiten 197-200, XP022135317, ISSN: 0007-8506, DOI: 10.1016/S0007-8506(07)60564-2
- GROCHE P ET AL: "Bending-rolling combinations for strips with optimized cross-section geometries", CIRP ANNALS, ELSEVIER BV, NL, CH, FR, Bd. 58, Nr. 1, 1. Januar 2009 (2009-01-01) , Seiten 263-266, XP026120259, ISSN: 0007-8506, DOI: 10.1016/J.CIRP.2009.03.051 [gefunden am 2009-04-28]

## Beschreibung

Die vorliegende Erfindung betrifft ein Verfahren zur Erzeugung von optimierten 2D- bzw. 3D-Walzprofilverläufen für eine entsprechende Vorrichtung, wobei die Walzprofilverläufe krümmungsstetig verrundet werden und dadurch Beschleunigungskräfte für die Verstellung von Profilierwalzen und Stellgliedern reduziert werden und eine entsprechend höhere Materialvorschubgeschwindigkeit ermöglicht wird. Das Verfahren umfasst entsprechende krümmungsstetige Verrundungs-Algorithmen, die entweder in einem CAD-Tool zur Erzeugung des optimierten 2D- bzw. 3D-Walzprofilverlaufs integriert werden oder sie können auch in einem elektronischen Vorschaltgerät einer Vorrichtung zur flexiblen Walzprofilierung implementiert sein, das vorgegebene, nicht optimierte 2D- bzw. 3D-Walzprofilverläufe mit bisher üblichen Krümmungssprüngen in optimierte, krümmungsstetige 2D- bzw. 3D-Walzprofilverläufe umwandelt.

### Stand der Technik:

Bekannter Stand der Technik ist eine Herstellung von Walzprofilen, die einen konstanten Querschnitt (2D-Profil) entlang eines Walzmaterialbandes aufweisen. Dabei wird das Walzmaterialband durch die Walzprofiliervorrichtung befördert und erhält während eines Walzprofilierprozesses das Profil, das den darin angeordneten und das Walzmaterialband pressend verformenden Profilierwalzen entspricht. Reiner Daelen erfand im Jahre 1848 ein Walzwerk, bei dem zwei horizontale Profilierwalzen eines Duo-Gerüsts durch zwei vertikale vor- oder nachgestellte Profilierwalzen ergänzt wurden und durch die Verstellbarkeit des Walzspaltes unterschiedliche rechteckige Profile ohne Profilierwalzenwechsel hergestellt werden konnten (Popular Science Vol. 38, S. 594f.). Hierbei und bei zahlreichen Weiterentwicklungen bleibt jedoch das einmal für den Walzprofilierprozess eingestellte Walzprofil konstant entlang der Walzrichtung bzw. entlang des Walzmaterialbandes bis die Maschine erneut auf ein anderes Profil eingestellt wird.

Sich verändernde 3D-Profile entlang eines Materialbandes können derzeit industriell fast ausschließlich nur durch Tiefziehverfahren hergestellt werden, die für eine Massenproduktion aufwendiger und teurer als Walzprofilierherstellverfahren sind.

Aus der Patentanmeldung Die102007024777 (A1) ist eine Vorrichtung zur flexiblen Walzprofilierung für ein 3D-Walzprofilieren bekannt, die einen Roboter mit einem Roboterarm umfasst, der computergesteuert aus einem Profilierwalzen-Set eine Profilierwalze auswählt und computergesteuert entsprechend dem Walzmaterialvorschub für die 3D-Walzprofilierung anwendet. Die gesamte Vorrichtung zur flexiblen Walzprofilierung kann dabei aus einigen Roboterarmen und einem Rolltisch bestehen. Der Walzmaterialbandvorschub ist jedoch relativ langsam, vor allem an den Stellen, an denen sich das Walzprofil ändert und die profilierende Profilierwalze durch entsprechende Stellglieder bewegt und dadurch für die Bewegung beschleunigt und abgebremst werden müssen.

Das Dokument von Hauger et al. "Flexibles Walzen von Tailer Rolled Blanks" (Stahl und Eisen Verlag Stahleisen, Düsseldorf Bd. 126, Nr. 5, vom 1. Jan. 2006; ISSN: 0340 4803) offenbart ein Verfahren zur Herstellung von Walzprofilen insbesondere für die Automobilindustrie, das sich dadurch auszeichnet, dass das Walzprofil mit veränderlichen Dicken hergestellt wird. Dabei wird eine jeweilige Dicke des Walzprofils an eine berechnete jeweilige Belastung optimierend angepasst, um Material und Gewicht einzusparen.

Das Dokument DE102007024777A1 offenbart eine Rollfalzvorrichtung, die mit einem gesteuerten Roboterarm ausgerüstet ist, um Walzprofile, die sich entlang ihrer Länge verändern, möglichst einfach und computergesteuert herstellen zu können. Durch einen zudem drehbaren Klemmtisch kann das Walzmaterial immer optimal zu den Walzen hingedreht werden, um senkrecht zu den Walzen zu stehen.

Nachteilig bei derzeitigen flexiblen Walzprofiliervorrichtungen sind der geringe Walzmaterialvorschub mit der damit verbundenen geringen Wirtschaftlichkeit, wobei der begrenzte Walzmaterialvorschub hauptsächlich dadurch zustande kommt, dass die Profilierwalzen mit verbundenen Aktuatoren und Stellgliedem in ihrer Ausrichtung und Position verändert, bewegt und damit letztlich beschleunigt und abgebremst werden müssen. Die dabei auftretenden Positionierungs- bzw. Beschleunigungskräfte für das Verstellen der Profilierwalzen, der verbundenen Aktuatoren und Stellglieder in Verbindung mit maximalen Stellkräften der eingesetzten Aktoren verlangsamen den Walzmaterialvorschub entsprechend soweit, dass sichergestellt werden kann, dass die vorgegebene Kurvenform des Walzprofilverlaufs von der flexiblen Walzprofiliervorrichtung mit bestimmten Toleranzen eingehalten werden kann.

Derzeitige CAD-Hilfsmittel für eine Erzeugung bzw. Programmierung des Walzprofils bzw. des Walzprofilverlaufs erzeugen solche Kurvenformen im Wesentlichen aus miteinander verbundenen Geraden- und Kreisbogenabschnitten. Für das 2D- bzw. 3D-Walzprofilieren sind solche Kurvenformen jedoch ungeeignet, weil sie nicht krümmungsstetig und dadurch auch nicht belastungsoptimal für beschleunigte Massen sind. Durch die an den Übergängen von Geraden zu Kreisbögen und umgekehrt auftretenden Beschleunigungskräfte für die Verstellung der Profilierwalzen und Stellglieder muss die Walzgeschwindigkeit reduziert werden, was die Wirtschaftlichkeit im Gegensatz zu Tiefzieh-Produktionsanlagen sehr begrenzt. Vorrichtungen zur Walzprofilierung, die einen konstanten Walzprofilquerschnitt erzeugen, sind im Automobilbau trotz ihrer ansonsten hohen Wirtschaftlichkeit nur sehr begrenzt einsetzbar, da dort überwiegend flexible bzw. über der Längsachse veränderliche 2D- bzw. 3D-Teilequerschnitte gefordert sind.

Daher besteht die Aufgabe der Erfindung in der Bereitstellung eines Verfahrens zur Erzeugung eines optimierten 2D- bzw. 3D-Walzprofilverlaufs und einer Vorrichtung dazu, die die Nachteile aus dem Stand der Technik beseitigen und ein schnelleres 2D- bzw. 3D-Walzprofilieren durch einen entsprechend optimierten 2D- bzw. 3D-Walzprofilverlauf, der geringere Stellkräfte erfordert, ermöglichen.

### Offenbarung der Erfindung:

Die vorstehende Aufgabe sowie weitere der Beschreibung zu entnehmende Aufgaben werden von einem Verfahren und einer Vorrichtung zur Erzeugung eines optimierten 2D-bzw. 3D-Walzprofilverlaufs mit einer im Wesentlichen krümmungsstetigen Verrundung gemäß Anspruch 1 und Anspruch 12 gelöst.

Erfindungsgemäß wird der optimierte 2D- bzw. 3D-Walzprofilverlauf bevorzugt unter Vorgabe eines gewünschten, sich verändernden 2D- bzw. 3D-Walzproflverlaufs, der sich im Wesentlichen aus miteinander verbundenen Geraden-, Kreisbogen- und Ellipsenabschnitten zusammensetzt, durch im Wesentlichen krümmungsstetige Verrundungs-Algorithmen erzeugt. Die zur Optimierung bevorzugt herangezogenen krümmungsstetigen Verrundungs-Algorithmen berechnen eine Beschleunigung einer Bahnkurve des eingegebenen gewünschten 2D- bzw. 3D-Walzprofilverlaufs als ihre zweite Ableitung und nehmen unter Berücksichtigung von Toleranzbändern bzw. einer maximal zulässigen Abweichung des optimierten vom ursprünglich eingegebenen Walzprofilverlauf eine Minimierung bzw. eine Begrenzung der auftretenden Beschleunigungen vor.

Bevorzugtes Ziel ist es, Verrundungs-Algorithmen einzusetzen, die eine im Wesentlichen krümmungsstetige Verrundung des Walzprofilverlaufs erzeugen. Dadurch werden bei einer Verstellung der Profilierwalzen zusammen mit deren Stellgliedern entlang des Walzprofilverlaufs die dafür notwendigen Stellgeschwindigkeiten bevorzugt nicht mehr sprungartig verändert bzw. beschleunigt und abgebremst, sondern so, dass die dafür notwendigen Beschleunigungs- bzw. Stellkräfte von den Stellgliedem definiert aufgebracht werden können. Dadurch können die Stellglieder bevorzugt schwächer dimensioniert werden und/oder es kann die Produktionsgeschwindigkeit des 2D- bzw. 3D-Walzprofils gesteigert werden.

Der optimierte 2D- bzw. 3D-Walzprofilverlauf wird bevorzugt so erzeugt, dass er aus dem eingegebenen gewünschten 2D- bzw. 3D-Walzprofilverlauf entweder partiell oder als ganzes berechnet bzw. optimiert wird. Dazu wird bei der partiellen Berechnung bzw. Optimierung bevorzugt nach jeder Eingabe eines jeweiligen neuen Kurvenabschnitts die Optimierung bzw. ein entsprechend optimierter Bahnkurven- oder Flächenabschnitt des Walzprofilverlaufs berechnet bzw. krümmungsstetig optimiert und angezeigt.

Dabei werden bevorzugt bestimmte Toleranzen bzw. maximale Abweichungen der optimierten Bahnkurve bzw. Fläche von der eingegebenen Bahnkurve bzw. Fläche berücksichtigt und eingehalten oder es können Parameter der Verrundungs-Algorithmen für die Berechnung der optimierten Bahnkurve verändert werden.

Das erfindungsgemäße Verfahren und die Vorrichtung kann dabei sowohl für sich verändernde 2D- als auch für 3D-Walzprofilverläufe angewendet werden. Ein sich verändernder 2D-Walzprofilverlauf verändert sich beispielsweise in einer Richtung quer oder in der Tiefe entlang der Vorschubrichtung des Walzmaterialbandes. Ein sich verändernder 3D-Walzprofilverlauf verändert sich beispielsweise in zwei orthogonalen Richtungen in Bezug auf die Vorschubrichtung des Walzmaterialbandes und verändert so sein Walzprofil in Richtung des Materialbandes beispielsweise sowohl in der Breite als auch in der Tiefe.

Zur Vermeidung von Missverständnissen wird an dieser Stelle vermerkt, dass der Term "Bahnkurve" und "Kurvenfunktion" oder "Funktion" und dergleichen zuvor und im weiteren Verlauf für einen "Walzprofilverlauf" steht, der entweder zwei- oder dreidimensional sein kann.

Ebenso steht der Begriff "Walzprofil" im Rahmen der vorliegenden Erfindung für ein 2D- bzw. 3D-Walzprofil mit einem entsprechend sich verändernden 2D- bzw. 3D-Walzprofil und wird der vereinfachten Ausdrucksweise wegen weiterhin als solches bezeichnet.

Ebenso beinhaltet der Begriff "Optimierung" stets die Optimierung bzw. eine Veränderung des Walzprofilverlaufs bzw. dessen Bahnkurven- bzw. Flächenverlaufs hinsichtlich einer im Wesentlichen krümmungsstetigen Verrundung, wenn das nicht ausdrücklich anders angegeben ist.

Weitere vorteilhafte Ausbildungen der Erfindung sind in den anhängigen Ansprüchen angegeben.

Eine bevorzugte Ausführungsform gemäß der vorliegenden Erfindung ist in nachfolgenden Zeichnungen und in einer detaillierten Beschreibung dargestellt, soll aber die vorliegende Erfindung nicht darauf begrenzen.

### Kurzbeschreibung der Zeichnungen:

- Fig. 1A: zeigt von vorne in Walzmaterialbandvorschubrichtung einen Querschnitt eines Walzprofils eines Walzmaterialbandes an einer Stelle AA (aus Fig. 1 B), wobei das Walzmaterialband zwischen Profilierwalzen eingespannt ist;
- Fig. 1B: zeigt eine Draufsicht des Walzmaterialbandes mit dem teils eingewalzten Walzprofil, das zwischen und unter den Profilierwalzen und Stellgliedern der jeweiligen Profilierwalzen eingespannt ist;
- Fig. 2: zeigt einen Teil des Walzprofilverlaufs f(x), zusammengesetzt aus Geraden- und Kreisbogenabschnitten, einen zugehörigen, betragsmäßigen Krümmungsverlauf |K(x)| und betragsmäßigen Beschleunigungsverlauf |a(x)|, sowie einen Teil eines optimierten Walzprofilverlaufs fₒₚₜ(x) mit dem zugehörigen, betragsmäßigen Krümmungs- und Beschleunigungsverlauf;
- Fig. 3: zeigt den Teil des Walzprofilverlaufs f(x), zusammengesetzt aus Geraden- und Kreisbogenabschnitten, den zugehörigen Krümmungs- und Beschleunigungsverlauf, sowie einen Teil des optimierten Walzprofilverlaufs fₒₚₜ(x) mit dem zugehörigen Krümmungs- und Beschleunigungsverlauf;
- Fig. 4: zeigt eine Funktion einer Klothoide y = f(x) (oder auch Klotoide, Cornu-Spirale);
- Fig. 5: zeigt zwei kreisbogenförmige Bahnverläufe K1 (x) und einen optimierten Bahnverlauf fₒₚₜ(x) mit krümmungsstetiger Verrundung als Approximation zu K1 (x);
- Fig. 6: zeigt einen optimierten Walzprofilverlauf fₒₚₜ(x) mit zugehöriger Beschleunigung a(x);
- Fig. 7: zeigt einen optimierten Walzprofilverlauf mit geradem Teil G, einem Klothoiden-Übergangsbogen A=50 und einem Kreisbogenabschnitt R=50 und den zugehörigen Krümmungsverlauf K(x), und
- Fig. 8: zeigt zwei belastungsoptimierte 2D-Walzprofilverläufe für Längsbalken mit einer Mittellast und mit einer Querschnitts-Optimierung hinsichtlich geringem Durchbiegen und Materialeinsparung.

### Detaillierte Beschreibung eines Ausführungsbeispiels:

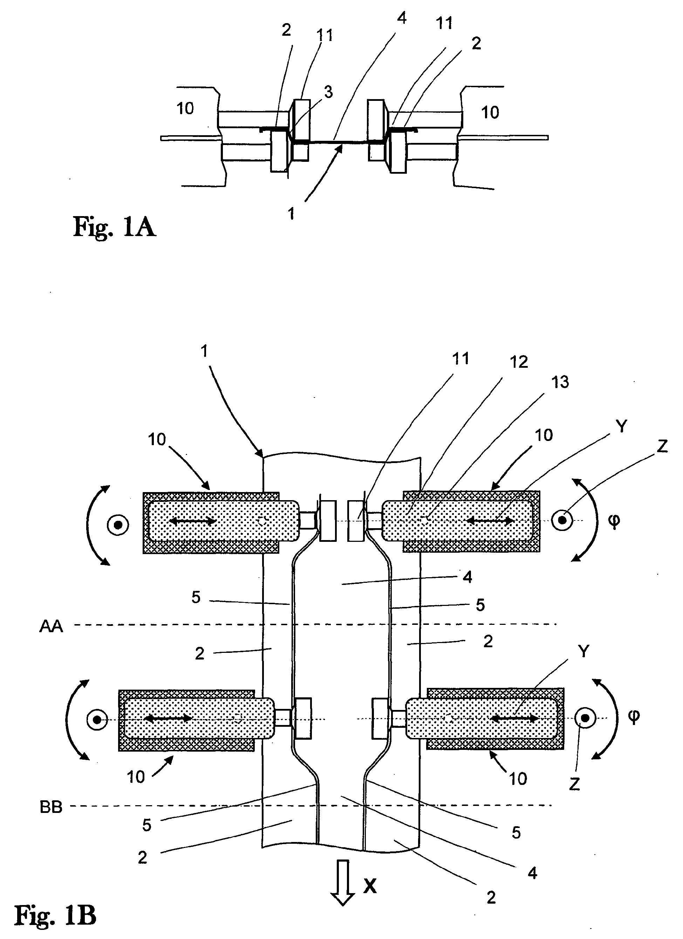

In Fig. 1A und in Fig. 1B ist ein Ausführungsbeispiel einer Vorrichtung zur flexiblen Walzprofilierung gezeigt, die ein Walzmaterialband 1 entlang einer Walzmaterialbandvorschubrichtung X zwischen mehreren Profilierwalzen 11 so führt und presst, dass sich Walzmaterialband 1 durch die sich einpressenden Profilierwalzen 11 verformt und dadurch obere Flächen 2, Seitenflächen 3 und eine Bodenfläche 4 entstehen. Dabei werden die Profilierwalzen 11 jeweils von dazugehörigen Stellgliedern 10 mit entsprechenden Motoren 12 in ihrer jeweiligen Position gehalten und angetrieben, wobei die um ihre jeweilige Achse rotierenden Profilierwalzen 11 das Walzmaterialband 1 pressen und mitlaufen oder bevorzugt durch Motoren 12 auch antreiben.

Die jeweiligen Positionen und Ausrichtungen der Profilierwalzen 11 und der damit verbundenen Motoren 12 und Teilstellgliedern werden durch die jeweiligen Stellglieder 10 aktuatorisch bewirkt, wobei sich die Profilierwalzen 11 durch die Stellglieder 10 in Querrichtung Y, in Richtung der Höhe Z und um einen Drehpunkt 13 in Drehrichtung ϕ computergesteuert definiert verstellen lassen. Die Verstellung der Profilierwalzen 11 entlang des Walzmaterialbands in Walzmaterialbandvorschubrichtung X geschieht durch einen ebenso gesteuerten, definierten Vorschub in dieser Richtung.

Unter Berücksichtigung, dass das Materialband 1 in Walzmaterialbandvorschubrichtung X gezogen bzw. geschoben wird, und dass die jeweiligen Stellglieder 10 computergesteuert so angesteuert werden, dass sich die Position und/oder die Achsenstellung der jeweiligen Profilierwalzen 11 verändert, verändert sich dadurch ebenso das Walzprofil, das somit als sog. 2D- bzw. 3D-Walzprofil mit einem sog. 2D- bzw. 3D-Walzprofilverlauf 5 bezeichnet werden kann. Das Walzprofil an der Schnittlinie AA der Fig. 1B, wie in der Fig. 1A verdeutlicht, hat beispielsweise ein anderes Profil als in einem Schnitt BB. Es ist nun für einen Fachmann leicht nachvollziehbar, dass die Profilierwalzen 11, um einen sich ändernden 2D- bzw. 3D-Walzprofilverlauf 5 zu erhalten, in ihrer jeweiligen Position und Ausrichtung durch die jeweiligen Stellglieder 10 entsprechend schnell als Funktion des Walzprofilverlaufs 5 hin- und her bewegt werden müssen.

In Anbetracht von bewegten Massen, die je nach Anlage unterschiedlich sind, aber in der Praxis im Wesentlichen 30 kg überschreiten, treten vor allem dann große Beschleunigungen auf bzw. sind dafür große Stellkräfte nötig, wenn die Bahnkurve des Walzprofilverlaufs 5 beispielsweise von einem Geradenabschnitt in einen Kreisbogenabschnitt einmündet, oder noch extremer, wenn ein Kreisbogenabschnitt in einen dazu gegenläufigen Kreisbogenabschnitt einmündet. Dies ist vor allem dann problematisch, wenn die entsprechenden Stellglieder 10 diese Kräfte nicht aufbringen können und dadurch sowohl Überlastungen dieser als auch undefinierte Abweichungen eines IST-Walzprofilverlaufs 5 von einem SOLL-Walzprofilverlauf 5 auftreten.

Durch die Stellglieder 10 kann beispielsweise ein 2D-Walzprofilverlauf 5, der sich in Querrichtung Y oder in der Höhe Z entlang der Walzmaterialbandvorschubrichtung X verändert, oder ein 3D-Walzprofilverlauf 5, der sich in Querrichtung Y und zugleich in der Höhe Z entlang der Walzmaterialbandvorschubrichtung X verändert, angesteuert werden.

Es ist vom Fachmann leicht nachvollziehbar, dass sich durch eine Veränderung des Walzprofilverlaufs 5 auch entsprechend veränderte Beschleunigungskräfte für die Stellglieder 10 ergeben. Erfindungsgemäß werden eingegebene 2D- bzw. 3D-Walzprofilverläufe 5 vor einer Produktionsanwendung durch entsprechende vorzugsweise krümmungsstetige Verrundungs-Algorithmen so verändert, dass die Beschleunigungskräfte auf definierte maximale Werte reduziert werden, und es wird der so berechnete bzw. dahingehend optimierte 2D- bzw. 3D-Walzprofilverlauf 5 ebenso abgespeichert und angezeigt. Nach Erzeugung und Abspeicherung des dahingehend optimierten, 2D- bzw. 3D-Walzprofilverlaufs 5 kann die Vorrichtung zur flexiblen Walzprofilierung gestartet und mit der Produktion des Walzprofils begonnen werden.

Der optimierte 2D- bzw. 3D-Walzprofilverlauf 5 wird bevorzugt mittels eines CAD-Hilfsmittels so erzeugt, dass der gewünschte 2D- bzw. 3D-Walzprofilverlauf 5 eingegeben wird und dann entweder partiell oder als ganzes berechnet, angezeigt und abgespeichert wird. Unter einem gewünschten Verlauf ist ein Verlauf zu verstehen, der sich aus Geraden oder gekrümmten Abschnitten zusammensetzt, wobei die gekrümmten Abschnitte aus Kreisbogen-, Ellipsen- oder Spline-ähnlichen Abschnitten bestehen können. So wie in der gegenwärtigen Anmeldung verwendet, ist ein Übergang ein Bereich zwischen zwei Geraden mit verschiedenen Neigungen, oder zwischen einer Gerade und einem gekrümmten Abschnitt oder zwischen zwei unterschiedlichen gekrümmten Abschnitten, wie beispielsweise zwischen einem Kreisbogenabschnitt und einem Ellipsenabschnitt, einem Kreisbogenabschnitt und einem Spline-ähnlichen Abschnitt usw. Beim gewünschten Verlauf ergeben sich die Übergänge zwischen den Abschnitten durch das einfache Aneinanderfügen der Abschnitte.

Bei der partiellen Berechnung des optimierten, 2D- bzw. 3D-Walzprofilverlaufs 5 werden jeweils nach Eingabe des nächsten Kurven- bzw. Flächenabschnitts des Walzprofilverlaufs 5 der jeweils neue Kurven- bzw. Flächenabschnitt in Bezug zum davorliegenden berechnet bzw. optimiert, bevorzugt angezeigt und kann nachbearbeitet werden. Dazu wird einer von verschiedenen, verfügbaren Verrundungs-Algorithmen ausgewählt und für alle weiteren Berechnungen angewendet. Für bestimmte Verrundungsbereiche bzw. Kurvenverläufe kann auch ein anderer Verrundungs-Algorithmus ausgewählt werden oder durch andere Parameter für diese Stelle geändert werden. Für die Berechnung bzw. Optimierung durch den im Wesentlichen krümmungsstetigen Verrundungs-Algorithmus werden bevorzugt maximal zulässige Beschleunigungen bzw.. bei eingegebenen Massen entsprechenden Stellkräfte der Stellglieder 10 in den verschiedenen Richtungen und in der Drehrichtung ϕ berücksichtigt.

Die Erzeugung des optimierten 2D- bzw. 3D-Walzprofilverlaufs 5 als Ganzes aus dem eingegebenen, gewünschten 2D- bzw. 3D-Walzprofilverlauf 5 erfolgt so, dass der gewünschte 2D- bzw. 3D-Walzprofilverlauf 5 bevorzugt mittels CAD-Hilfsmittel angezeigt, der optimierte, 2D- bzw. 3D-Walzprofilverlaufs 5 durch einen Verrundungs-Algorithmus erzeugt und daraufhin beide Kurvenverläufe angezeigt und bei Bedarf verändert werden können. Daraufhin wird der optimierte 2D- bzw. 3D-Walzprofilverlauf 5 abgespeichert und für die Ansteuerung der flexiblen Walzprofiliervorrichtung verwendet.

Im Weiteren werden Verrundungs-Algorithmen für die Berechnung des optimierten 2D- bzw. 3D-Walzprofilverlaufs 5 beschrieben, die geeignet sind, um die oben beschriebenen Beschleunigungen der Stellglieder 10 zu reduzieren. Eine Reduktion der Beschleunigungskräfte tritt beispielsweise dann ein, wenn ein Übergang von einem geraden Verlauf in einen kreisbogenförmigen Verlauf eines Walzprofilverlaufs 5 durch Einsetzen eines Übergangsbogens krümmungsstetig verrundet wird, so dass das jeweilige Stellglied 10 nicht aus der Ruhestellung heraus sprungartig in eine Drehwinkelgeschwindigkeit um den jeweiligen Drehpunkt 13 herum beschleunigt werden muss, um diesem Walzprofilverlauf 5 zu folgen, was theoretisch aufgrund endlich erzeugbarer Beschleunigungskräfte auch nicht geht.

Im Folgenden werden verschiedene Optimierungsaspekte, Verfahren und Funktionen, die für die Verrundungs-Algorithmen verwendet werden, vorgestellt.

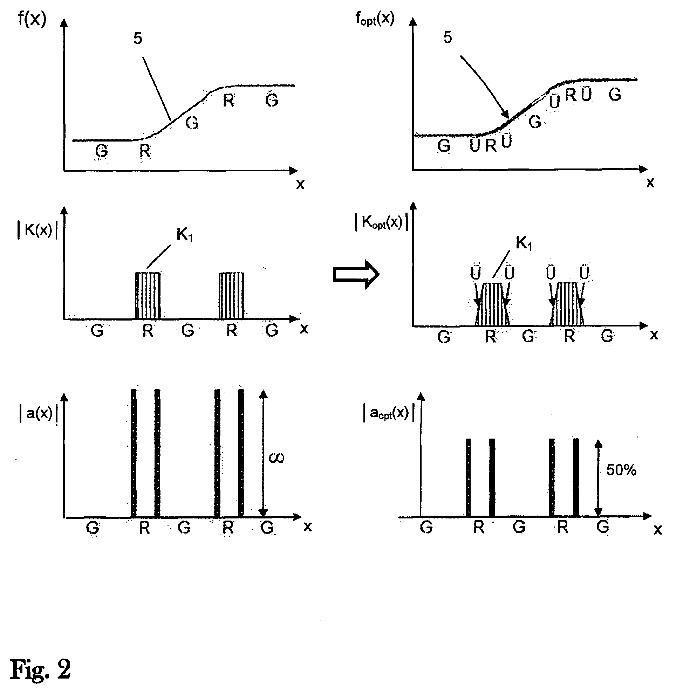

Fig. 2 zeigt links den gewünschten Walzprofilverlauf 5 als eine Funktion f(x), die aus Geradenabschnitten G und Kreisbogenabschnitten R besteht. Darunter ist die zugehörige nach x abgeleitete Betragsfunktion als Betrag der Krümmung |K(x)| gezeigt, die in den Bereichen der Geraden G die Krümmung Null und in den Bereichen der Kreisbogenabschnitte R die Werte K1 aufweist, wobei die Werte eigentlich einmal positiv und einmal negativ sind. Darunter ist als Betragsfunktion die Ableitung der Krümmung K(x) nach x dargestellt, die vier unendlich große Beschleunigungsspitzen |a(x)| an den Stellen, wo die Krümmung |K(x)| plötzlich von Null auf einen Wert K1 ansteigt und dort, wo die Krümmung von K1 sprungartig wieder auf Null absinkt. Diese Beschleunigungsspitzen sind unendlich groß und kurz und eigentlich jeweils einmal positiv und einmal negativ und würden theoretisch einmal einer unendlich großen positiven Beschleunigung und einmal einer unendlich großen negativen Beschleunigung (= Abbremsung) des jeweiligen Stellglieds 10 entsprechen. Rechts daneben wurde eine erste Optimierung der Bahnkurve f(x) als fₒₚₜ(x) so vorgenommen, dass die dabei auftretenden Beschleunigungen |a(x)| der Stellglieder 10 auf beispielsweise 50% der maximal möglichen Beschleunigung bzw. der maximal möglichen Beschleunigungskräfte der Stellglieder 10 begrenzt wurde. Hierfür sind an den Übergängen zwischen zwei benachbarten Kurventeilen der Funktion f(x), die einen Krümmungssprung aufweisen, wie in diesem Beispiel zwischen den Geradenabschnitten G und den Kreisbogenabschnitten R, jeweils Übergangsbereiche Ü definiert und eingesetzt worden, die eine krümmungsstetige Verrundung der angrenzenden Bahnkurvenabschnitte bewirken sollen. Fig. 2 zeigt dafür rechts im Bild einen definierten rampenförmigen Anstieg bzw. Abfall der Krümmungskurve |Kₒₚₜ(x)| in den Übergangsbereichen Ü, die reduzierte Beschleunigungen |aₒₚₜ(x)| bewirken. Dadurch bleiben die Beschleunigungen der Stellglieder in einem realistischen, praktisch machbaren Bereich, und es werden dadurch undefinierte Verzerrungen eines Walzprofilverlaufs vermieden. Die weiterhin vorhandenen maximalen Krümmungen K1 korrelieren mit den wesentlichen Teilen der Krümmungen K1 des linken Krümmungsverlaufs der nicht optimierten Funktion f(x), die dem gewünschten 2D-bzw. 3D-Walzprofilverlauf 5 entspricht. Die Darstellung der Kurvenformen in Fig. 2 ist zunächst nur einmal anschaulich qualitativ vorgenommen und soll lediglich das Prinzip bzw. das Verfahren der Optimierung und der Auswirkung aufzeigen.

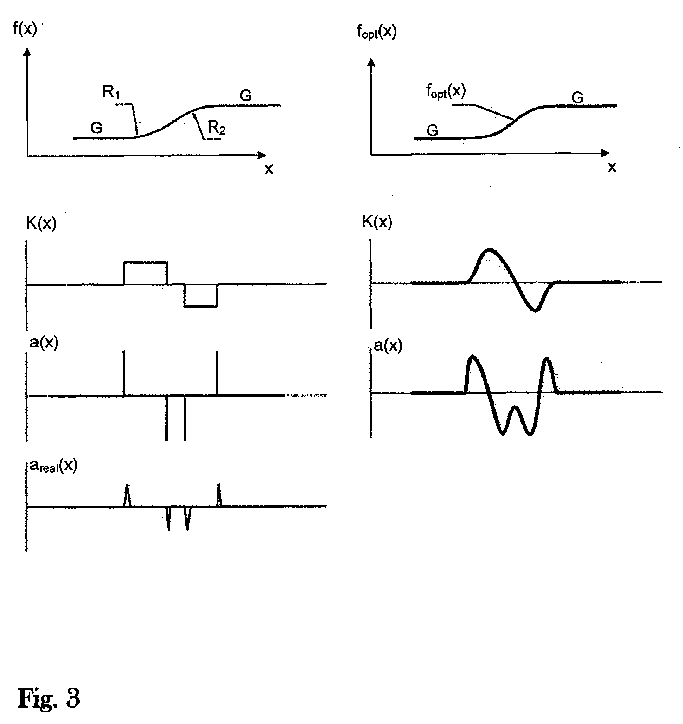

Fig. 3. zeigt den gewünschten Walzprofilverlauf 5 als eine Funktion f(x), die ebenso wie in Fig. 2 aus Geradenabschnitten G und Kreisbogenabschnitten R1 und R2 besteht. Darunter ist die zugehörige abgeleitete Funktion der Krümmung K(x) gezeigt, die in den Bereichen der Geraden G die Krümmung Null hat und in den Bereichen der Kreisbogenabschnitte R1, R2 einen positiven und einen negativen Krümmungswert aufweist. Die Beschleunigung a(x) als Ableitung der Funktion f(x) ergibt demnach, wie im Beispiel der Fig. 2, theoretisch an den Krümmungssprüngen unendlich große Beschleunigungen bzw. Abbremsungen a(x). In der Praxis sind jedoch die Beschleunigungen bzw. Abbremsungen aᵣₑₐₗ(x), bedingt durch maximal erzeugbare Stellgliedkräfte und -abbremsungen, endlich groß, was zu einer undefinierten Kurvenveränderung des nicht optimierten Walzprofilverlaufs 5 führen würde.

Um eine undefinierte Kurvenveränderung eines Walzprofilverlaufs 5 zu verhindern, wird nunmehr ein krümmungsstetiger Verrundungs-Algorithmus auf die Funktion f(x) angewendet, die dadurch so verändert wird, dass sich endliche und definierte Beschleunigungskräfte ergeben, die von den Stellgliedern 10 aufgebracht werden können. Dabei werden Verrundungsfunktionen an die Krümmungen R1 und R2 so angepasst, dass diese im Wesentlichen bestehen bleiben, jedoch aber ergeben sich eingehende und ausgehende Ausläufe. Solche, durch Verrundungs-Algorithmen berechnete Übergangsbereiche, werden im weiteren Verlauf auch Übergangsbögen genannt.

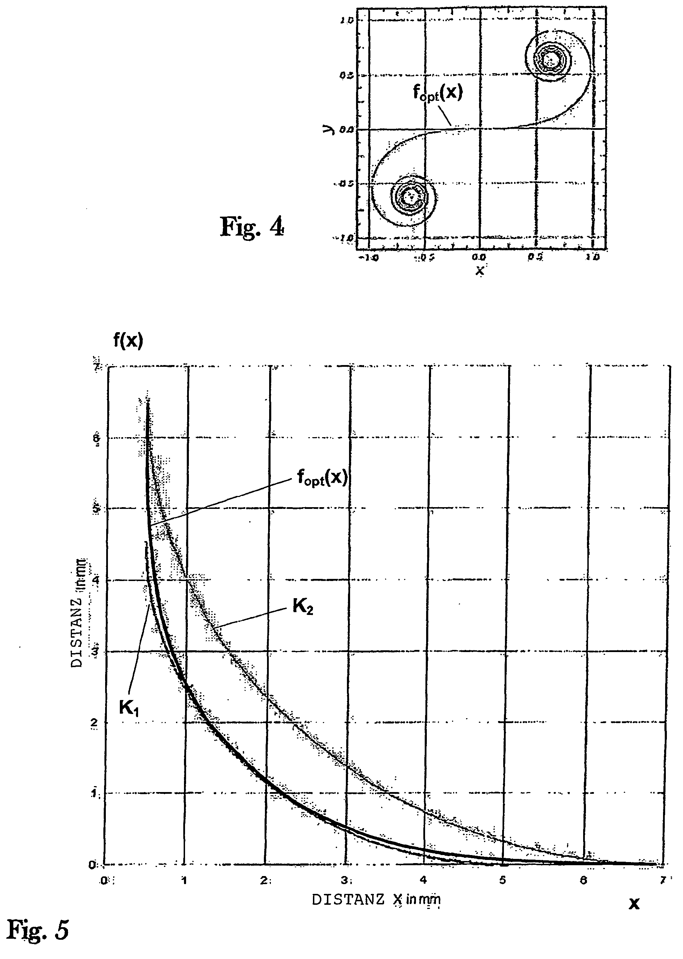

Fig. 4 zeigt einen weiteren bevorzugten Verrundungs-Algorithmus als Funktion y = fₒₚₜ(x), die als Klothoide oder auch als Cornu-Spirale bekannt ist und eine krümmungsstetige Funktion mit linear ansteigender Krümmung darstellt.

Fig. 5 zeigt ein Diagramm mit der Funktion fₒₚₜ(x) mit krümmungsstetiger Verrundung auf Basis der Klothoiden-Funktion im Vergleich mit zwei normalen Kreisbogenfunktionen K1 und K2 als Einhüllende. Dabei ist die Funktion fₒₚₜ(x) mit der krümmungsstetigen Verrundung an die Kreisbogenfunktion K1 angepasst und besitzt auslaufende Enden, die bis zur Kreisbogenfunktion K2 reichen.

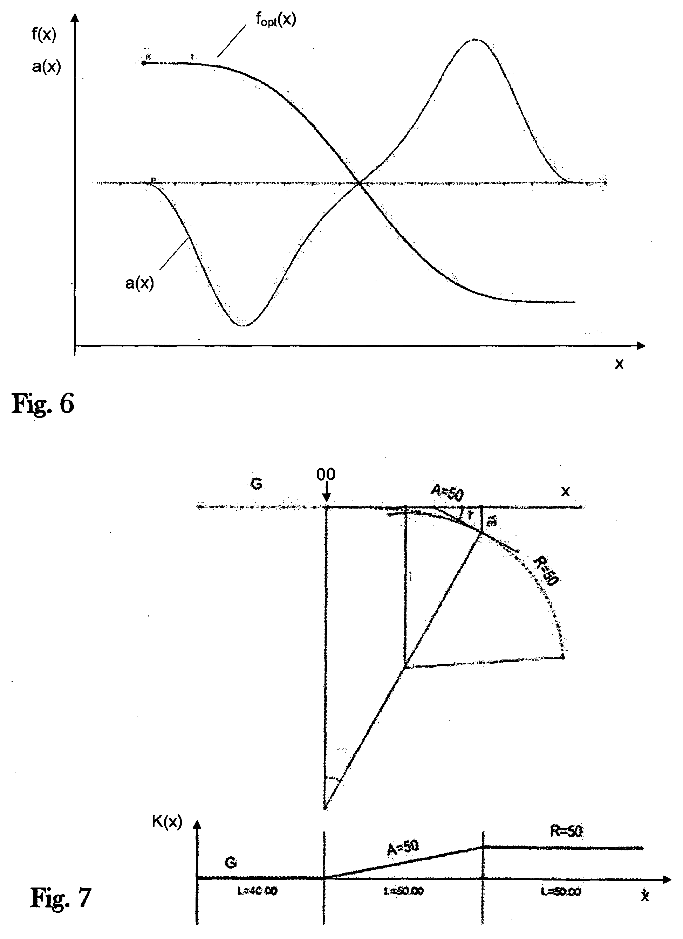

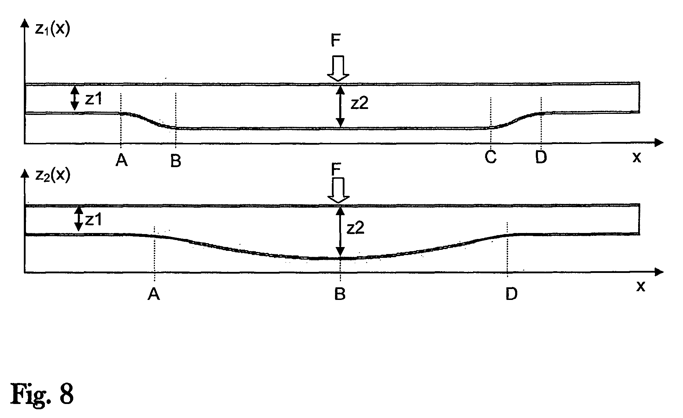

Fig. 6 zeigt ein Diagramm einer bevorzugten optimierten Funktion fₒₚₜ(x) mit der krümmungsstetigen Verrundung auf Basis zweier überlagerter Sinus-Funktionen und die zugehörige Funktion der Beschleunigung a(x). Eine der bei fₒₚₜ(x) zugrunde gelegte, bevorzugte Verrundungs-Funktion für die Geraden- und Kreisbogenabschnitte bzw. für die Übergangsbögen lautet fₒₚₜ(x) = sin(x) + 1/9 sin(3x). Sinus-Funktionen und überlagerte Sinus-Funktionen werden auch bevorzugt für eine belastungsoptimierte Krümmungsverrundung eingesetzt, so wie in Fig. 8 beispielhaft dargestellt.

Fig. 7 zeigt die Bahnkurve einer bevorzugten Funktion, die aus einem Geradenabschnitt G, einem Übergangsbogen A=50 als Klothoiden-Funktion und einem Kreisbogenabschnitt R=50 besteht. Die Optimierung der Bahnkurve beginnt am Punkt 00, indem der Geradenabschnitt G in den Übergangsbogen A=50 übergeht und endet an dem Punkt, bei dem der Übergangsbogen A=50 in den Kreisbogenabschnitt R=50 übergeht. Die dazu korrespondierende Funktion der Krümmung K(x) zeigt ab dem Beginn des Übergangsbogen A=50 bei 00 einen linearen Anstieg der Krümmung K(x) von Null auf den Maximalwert R=50 und bleibt dann konstant, da der Kreisbogenabschnitt konstant bleibt.

Ein weiterer bevorzugter Verrundungs-Algorithmus ist als Polynomfunktion vorstellbar, die beispielsweise eine oder mehrere Sinusfunktionen oder die Klothoiden-Funktion approximiert.

Weitere bevorzugte Verrundungs-Algorithmen zur Berechnung krümmungsstetiger Verrundungen basieren auf einem oder auf einer Kombination von mindestens zwei der nachfolgenden Algorithmen bzw. Funktionen, wie beispielsweise einer Klothoiden-Funktion, einer Sinus-Funktion, einer kubischen Parabel-Funktion, einer Blossbogen-Funktion, einer Übergangsbogenfunktion nach Schramm, einer überlagerten Sinuskurven-Funktion, einer Parabel-Funktion n-ter Ordnung oder einer Potenzreihen-Funktion als Approximation zu einer der vorgenannten Kurvenformen.

Fig. 8 zeigt eine weitere bevorzugte Anwendung einer belastungsgerechten Verrundung eines rechteckigen Biegebalkens, der nicht im Bild dargestellt ist, und der in der Mitte an der Stelle F eine Last F trägt, die in den Balken mit den unterschiedlich optimierten Profilen dargestellt ist. Dabei sind zwei Biegebalken oben und unten im Bild dargestellt, die unterschiedliche Querschnittsverläufe z1 (x) und z2(x) aufweisen. Dabei beginnt der Querschnitt z1(x) mit einer Querschnittshöhe z1, fängt an der Stelle A an, bogenförmig höher zu werden, mündet an der Stelle B wieder bogenförmigen in einen Querschnitt z2 ein und beginnt an der Stelle C wieder, sich bogenförmig zu verjüngen und bleibt schließlich ab der Stelle D wieder konstant mit der Höhe z1. Der untere Balken hat hingegen einen der zu erwartenden Belastung besser angepassten, parabelförmigen Verlauf z2(x) entlang der x Achse und ist so noch weiter optimiert hinsichtlich einer möglichst hohen Materialeinsparung bei möglichst geringer Durchbiegung. Die Grundidee dabei ist, dass belastungsoptimierte 3D-Profilverläufe fast immer auch schon fertigungsoptimal für das flexible Walzprofilieren sind und damit hinsichtlich einer hohen Materialeinsparung auch besser geeignet sind als z.B. der mit Radien verrundete und dem optimalen Verlauf nur grob angepasste Querschnitt z1. Hierfür werden die zu erwartenden Beiastungsverläufe eines Teils und ein dafür optimierter Walzprofilverlauf 5 berechnet, entsprechend krümmungsstetig optimiert und entsprechend materialoptimiert gefertigt, was letztlich auch einer Gewichtsoptimierung entspricht.

Erfindungsgemäß sind die hierin beschriebenen Verrundungs-Algorithmen bevorzugt in einem CAD-System integriert, so dass sie entweder gleich während der Eingabe des gewünschten 2D- bzw. 3D-Walzprofilverlaufs 5 eine Optimierung vornehmen und den entsprechend optimierten 2D- bzw. 3D-Walzprofilverlauf 5 erzeugen, der angezeigt wird und modifiziert werden kann oder die Verrundungs-Algorithmen werden auf die Gesamtkurve des Walzprofilverlaufs 5 angewendet.

Es ist auch vorstellbar, dass die Verrundungs-Algorithmen in einem elektronischen Gerät integriert werden, das einen Signaleingang für den gewünschten 2D- bzw. 3D-Walzprofilverlauf 5 und einem Signalausgang für den berechneten optimierten 2D- bzw. 3D-Walzprofilverlauf 5 aufweist, der beispielsweise einer flexiblen Walzprofiliervorrichtung zugeführt werden kann.

Weitere mögliche Ausbildungsformen sind in den folgenden Ansprüchen beschrieben.

Die in den Ansprüchen genannten Bezugszeichen dienen der besseren Verständlichkeit, beschränken aber die Ansprüche nicht auf die in den Figuren dargestellten Formen.

### Bezugszeichenliste:

- 1: Walzmaterialband
- 2: Obere Fläche
- 3: Seitenfläche
- 4: Bodenfläche
- 5: Walzprofilverlauf
- 10: Stellglied
- 11: Profilierwalze
- 12: Motor
- 13: Drehpunkt
- AA: Schnittlinie
- BB: Schnittlinie
- ϕ: Drehrichtung
- X: Walzmaterialbandvorschubrichtung
- Y: Horizontale Querrichtung (zur Walzmaterialvorschubrichtung)
- Z: Höhe

## Patentansprüche

1. Verfahren zur automatisichen Erzeugung eines optimierten 2D- bzw. 3D-Walzprofilverlaufs (5) unter Vorgabe eines gewünschten 2D- bzw. 3D-Walzprofilverlaufs (5) eines entlang einer Walzmaterialvorschubrichtung (X) sich ändernden Walzprofils (5) und Ansteuerung einer flexiblen Walzprofiliervorrichtung, bei der sich Profilierwalzen (11) während eines Walzprofilierprozesses computergesteuert verstellen lassen, wobei das Verfahren zur Erzeugung des optimierten 2D- bzw. 3D-Walzprofilverlaufs (5) folgendes umfasst:
a) Eingabe des gewünschten 2D- bzw. 3D-Walzprofilverlaufs (5) mittels CAD-Hilfsmittel, wobei sich der gewünschte 2D- bzw. 3D-Walzprofilverlauf (5) aus einer Vielzahl von geraden und/oder gekrümmten Abschnitten und entsprechenden Übergängen zusammensetzt;
b) Berechnung des optimierten 2D- bzw. 3D-Walzprofilverlaufs (5) aus dem eingegebenen gewünschten 2D- bzw. 3D-Walzprofilverlauf (5) durch Verrundungs-Algorithmen an den Übergängen zwischen den geraden und/oder gekrümmten Abschnitten, um jeweilige Übergangsbögen an den Übergängen zu bestimmen, wobei die Verrundungs-Algorithmen den 2D- bzw. 3D-Walzprofilverlauf (5) im Wesentlichen krümmungsstetig an den Übergangsbögen verrunden, so dass dementsprechend der optimierte 2D- bzw. 3D-Walzprofilverlauf (5) erzeugt wird, der Krümmungssprünge darin im Wesentlichen vermeidet;
c) Bestätigung oder Modifikation eines Bereichs des optimierten 2D- bzw. 3D-Walzprofilverlaufs (5); und
d) Abspeicherung des optimierten 2D- bzw. 3D-Walzprofilverlaufs (5).

2. Verfahren gemäß Anspruch 1, wobei der in Schritt d) optimierte 2D- bzw. 3D-Walzprofüverlauf (5) zur Ansteuerung einer flexiblen Walzprofiliervorrichtung verwendet wird.

3. Verfahren gemäß Anspruch 1 oder 2, wobei die in Schritt a) vorgenommene Eingabe durch ein Einlesen eines Datensatzes bzw. eines Daten-Files mit dem gewünschten 2D- bzw. 3D-Walzprofilverlauf (5) erfolgt.

4. Verfahren gemäß einem der vorstehenden Ansprüche, wobei in Schritt a) die Eingabe des gewünschten 2D- bzw. 3D-Walzprofilverlaufs (5) in das CAD-Hilfsmittel im Wesentlichen durch Geraden- und Kreisbogenabschnitte und/oder durch Punkte, die durch eine Funktion, wie beispielsweise eine kubische Spline-Funktion, einen Kurvenabschnitt erzeugen, erfolgt.

5. Verfahren gemäß einem der vorstehenden Ansprüche, wobei die Schritte a) - c) für die Eingabe des gewünschten 2D- bzw. 3D-Walzprofilverlaufs (5) in das CAD-Hilfsmittel, für die Berechnung des optimierten 2D- bzw. 3D-Walzprofilverlaufs (5), für die Anzeige des eingegebenen und des optimierten 2D- bzw. 3D-Walzprofilverlaufs (5) und für Modifikationen bzw. Bestätigungen des optimierten 2D- bzw. 3D-Walzprofilverlaufs (5) so geschieht, dass nach einer partiellen Eingabe eines Abschnitts des gewünschten 2D- bzw. 3D-Walzprofilveriaufs (5) die weiteren Schritte b)-c) ausgeführt werden, indem eine Optimierungsberechnung, eine Ausgabe bzw. Anzeige und eine Modifikation des partiellen optimierten 2D- bzw. 3D-Walzprofilverlaufs (5) ausgeführt wird und die Optimierung also im Wesentlichen von Punkt zu Punk bzw. von Flächenabschnitt zu Flächenabschnitt erfolgt.

6. Verfahren gemäß einem der vorstehenden Ansprüche, wobei die in Schritt a) vorgenommenen Eingaben auch maximale Abweichungen für die in Schritt b) vorgenommenen Optimierungsberechnungen enthalten, wie beispielsweise maximale und/oder minimale Radien und/oder maximale Abweichungen von geraden oder gekrümmten Strecken des Walzprofils und/oder wobei Startpositionen einer Optimierungsberechnung angegeben werden können.

7. Verfahren gemäß einem der vorstehenden Ansprüche, wobei der in Schritt b) jeweils ausgeführte Verrundungs-Algorithmus generell oder partiell für einen bestimmten Flächenbereich aus einer Reihe von Verrundungs-Algorithmen ausgewählt werden kann.

8. Verfahren gemäß einem der vorstehenden Ansprüche, wobei ein in Schritt b) zur Verfügung stehender bzw. angewendeter Verrundungs-Algorithmus darauf basiert, dass in Bereichen des 2D- bzw. 3D-Walzprofilverlaufs (5) ab einer bestimmten Krümmungsänderung bzw. Beschleunigung des Walzprofilverlaufs (5), wie beispielsweise zwischen einer Geraden und einer Kreisbogenkrümmung, zwei unterschiedlichen Kreisbogenkrümmungen oder zwei winkelig ineinander übergehenden Geradenabschnitten, Übergangsbögen in den 2D- bzw. 3D-Walzprofilverlaufs (5) eingefügt werden, die dessen Kurvenverlauf krümmungsstetig verrunden.

9. Verfahren gemäß Anspruch 8, wobei in Schritt b) die Übergangsbögen aus endlich vielen Kreisbogenabschnitten unterschiedlicher Radien rechnerisch so zusammengesetzt werden, dass sich die Endpunkte jeweils überlappen und jeweils ein treppenförmiger Anstieg bzw. Abfall des Krümmungsradius eine bestimmte Grenze nicht überschreitet, und dass sich dadurch die im Wesentlichen krümmungsstetige Verrundung ergibt, oder
die Übergangsbögen aus endlich vielen Ellipsenabschnitten entsprechend so berechnet zusammengesetzt werden, dass sich die Endpunkte jeweils überlappen und jeweils ein treppenförmiger Anstieg bzw. Abfall des Krümmungsradius eine bestimmte Grenze nicht überschreitet, so dass sich dadurch die im Wesentlichen krümmungsstetige Verrundung ergibt, oder
die Übergangsbögen auf einer entsprechenden Berechnung und Anpassung einer Funktion oder von kombinierten Funktionen an den gewünschten 2D- bzw. 3D-Walzprofilverlaufs (5) erfolgt, wobei Funktionen dienen wie von Klothoiden, Sinusoiden, kubischen Parabeln, Blossbogen, Übergangsbogen nach Schramm, mehrere überlagerte Sinuskurven, Parabeln n-ter Ordnung oder indem eine Potenzreihenentwicklung einer der vorgenannten Kurvenformen berechnet und angewendet wird, oder
die Übergangsbögen und der in einer ersten Stufe optimierte 2D- bzw. 3D-Walzprofilveriauf (5) zusätzlich anhand von Sensorsignalen, die während einer Fertigung dieses Walzprofilverlaufs (5) auftretende reale Beschleunigungskräfte der Stellglieder (10) anzeigen, nochmals optimiert werden, wobei auch bevorzugt Krümmungsbereiche des Walzprofilverlaufs (5) hinsichtlich einer Reduktion von Stellgliedkräften verändert werden.

10. Verfahren gemäß einem der vorstehenden Ansprüche, wobei der in Schritt b) berechnete und eingesetzte Übergangsbogen auch einen oder mehrere gesamte Kurvenabschnitte ersetzen kann, und/oder
der in Schritt b) zur Verfügung stehende bzw. angewendete Verrundungs-Algorithmus in die Berechnung auch Massen von bewegten Profilierwalzen (11) und bewegten Stellgliedern (10) und maximal zulässige und auftretende Beschleunigungskräfte für die Stellglieder (10) einbezieht, und/oder
der in Schritt b) zur Verfügung stehende bzw. angewendete Verrundungs-Algorithmus in die Berechnung auch die Walzmaterialvorschubgeschwindigkeit mit einbezieht, oder
der in Schritt b) zur Verfügung stehende bzw. angewendete Verrundungs-Algorithmus zusätzlich eine Optimierungsberechnung dahingehend vornimmt, dass sich eine maximale Walzmaterialvorschubgeschwindigkeit ergibt, und/oder
der in Schritt b) zur Verfügung stehende bzw. angewendete Verrundungs-Algorithmus die Optimierungs- bzw. Verrundungsberechnung des gewünschten Walzprofilverlaufs (5) zusätzlich hinsichtlich einer maximalen Belastungsfähigkeit bzw. Stabilität eines so optimierten Walzprofilteils vornimmt bzw. vorschlägt, wobei bevorzugt die Belastung des Walzprofilteils dazu auch eingegeben werden kann.

11. Verfahren gemäß einem der vorstehenden Ansprüche, wobei ein optimierter 2D- bzw. 3D-Walzprofilverlauf auch mehrere sich verändernde Walzprofilverläufe entlang des Walzmaterialbandes enthalten kann, die jeweils gemäß den Schritten a) - c) optimiert werden.

12. Walzprofiliervorrichtüng zur Erzeugung eines optimierten 2D- bzw. 3D-Walzprofilverlaufs (5) mit einem Verfahren gemäß einem der vorstehenden Ansprüche 1-11.

13. Vorrichtung zur Erzeugung des optimierten 2D- bzw. 3D-Walzprofilverlaufs (5) gemäß einem oder mehreren der vorstehenden Ansprüche 1-11, wobei die Vorrichtung als elektronisches Gerät bevorzugt eine Schnittstelle zu einer flexiblen Walzprofiliervorrichtung und/oder eine Schnittstelle zur Aufnahme von Daten, die den gewünschten 2D- bzw. 3D-Walzprotilverlauf (5) enthalten, aufweist.

14. Walzprofiliervorrichtung gemäß Anspruch 12 oder 13, wobei die Walzprofiliervorrichtung Sensoren zur Ermittlung von Beschleunigungskräften und/oder Stellkräften der Stellglieder (10) aufweist.

## Claims

1. Method for automatically generating an optimized 2D or 3D roller profile curve (5) having a prescribed desired 2D or 3D roller profile curve (5) of a roller profile (5) that changes along a rolled material feed direction (X) and control of a flexible roller profile device, in which profiling rollers (11) are adjustable in a computer-controlled manner during a roller profiling profess, the method for generating the optimized 2D or 3D roller profile curve (5) comprising:
a) entering the desired 2D or 3D roller profile curve (5) by means of CAD tools, the desired 2D or 3D roller profile curve (3) being composed of a plurality of straight and/or curved portions and corresponding transitions;
b) calculating the optimized 2D or 3D roller profile curve (5) from the input and desired 2D or 3D roller profile curve (5) using rounding algorithm at the transition points between the straight and/or the curved portions in order to determine corresponding transition arcs at the transition points, wherein the rounding algorithms round off the 2D or 3D profile curve (5) witch a substantially continuous curvature at the transition arcs, so that the optimized 2D or 3D roller profile curve (5) is generate, accordingly substantially avoiding curvature steps;
c) confirming or modifying a region of the optimized 2D or 3D roller profile curve (5): and
d) saving the optimized 2D or 3D roller profile curve (5).

2. Method according to Claim 1, wherein the 2D or 3D roller profile curve (5) optimized in step d) is used for deriving a flexible roller profiling device.

3. Method according to Claim 1 or 2, wherein the entry performed in step a) takes place by reading in a data set or a data file having the desired 2D or 3D roller profile curve (5).

4. Method according to one of the above Claims, wherein in step a) the entry of the desired 2D or 3D roller profile curve (5) into the CAD tool substantially takes place by means of straight and circular arc portions and/or by means of points which generate a curve portion via a function, such as a cubic spline function.

5. Method according to one of the above Claims, wherein steps a) - c) for entry of the desired 2D or 3D roller profile curve (5) into the CAD tool, for calculating the optimized 2D or 3D roller profile curve (5), for indicating the centered and the optimized 2D or 3D roller profile curve (5) and for modifying or conforming the optimized 2D or 3D roller profile curve (5) take place in such a way that after partial entry of a portion of the desired 2D or 3D roller profile curve (5), the additional steps b)-c) are executed by means of an optimization calculation, an output or indication, respectively, and a modification of the partial optimized 2D or 3D roller profile curve (5), that is, an optimization that substantially takes place from one point to the other or from one area section to the other, respectively.

6. Method according to one of the above Claims, wherein the entries performed in step a) also contain maximum deviations for the optimization calculation performed in step b), such as e.g. maximum and/or minimum radii and/or maximum deviations from straight or curved portions or the roller profile, and/or where startling positions of an optimization calculation can be indicated.

7. Method according to one of the above Claims, wherein each rounding algorithm performed in step b) can be selected generally or partially for a specific area section from a number of rounding algorithms.

8. Method according to one of the above Claims, wherein a rounding algorithm available or used, respectively, in step b) is based on the insertion of transitional arcs into the 2D or 3D roller profile curvature (5), respectively, which rounds its curve with the continuous curvature, in areas of the 2D or 3D roller profile curve (5), respectively, starting at a predetermined curvature change or acceleration of the roller profile curvature (5), respectively, as for instance between a straight portion and a circular arc curvature, two different circular arc curvatures or two angularly transitioning straight portions.

9. Method according to Claim 8, wherein in step b) the transitional arcs are mathematically put together from a finite number of circular are portion with different radii in such a way that the end points overlap in each case and a stepped rise or fall, respectively, of the curvature radius in each case does not exceed a certain limit, resulting in the rounding at a substantially continuous curvature; or
the transitional arcs are accordingly mathematically put together from a finite number of ellipse portions in such a way that the end points overlap in each case and a stepped rise or fall, respectively, of the curvature radius in each case does not exceed a certain limit, resulting in the rounding at a substantially continuous curvature; or
the transitional arcs are based on a corresponding calculation and adaptation of a function or of combined functions to the desired 2D or 3D roller profile curve (5), with the use of functions such as those of clothoids, sinusoids, cubic parabolas, Bloss arcs, transitional arcs according to Schramm, several overlaid sinus curves, parabolas of the n^{th} order, or wherein a power series development of one the above-mentioned curvature shapes is calculated and used; or
the transitional arcs and the 2D or 3D roller profile curve (5) optimized in a first stage are again optimized by means of sensor signals vindicating real acceleration forces of the actuators (10) which occur during manufacture of this roller profile curve (5), with curvature areas of the roller profile curve (5) preferable also being altered with a view to a reduction of actuator forces.

10. Method according to one of the above Claims, wherein the transitional arc calculated sand used in step b) can also replace one or more entire curvature portions, and/or
the rounding algorithm available or used in step b) also includes in the calculation masses of moved profiling rollers (11) and moved actuators (10) and maximally permissible and occurring acceleration forces for the actuators (10), and/or
the rounding algorithm available or used in step b) also includes the rolled material feed speed in the calculation; or
the rounding algorithm available or used in step b) additionally performs optimization calculation resulting in a maximum rolled material feed speed, and/or
the rounding algorithm available or used in step b) additionally performs or proposes optimisation or rounding calculation, respectively, of the desired roller profile curvature (5) in terms of maximum strength or stability, respectively, of a roller profile part optimized in such a way, preferably with the possibility of entering the load on the roller profile part for this purpose.

11. Method according to one of the above Claims, wherein an optimized 2D or 3D roller profile curve can also contain more than one altering roller profile curves along the roller material strip, each of which is optimized according to steps a) - c).

12. Roller profiling device for generating an optimized 2D or 3D roller profile curve (5) by means of a method according to one of the above Claims 1 - 11.

13. Device for generating the optimized 2D or 3D roller profile curve (5) according to one or more of the above Claims 1-11, the device as an electronic unit preferably having an interface to a flexible roller profiling device and/or an interface for storming data which contain the desired 2D or 3D roller profile curve (5).

14. Roller profiling device according to Claim 12 or 13, the roller profiling device having sensors for determining acceleration forces and/or actuating moments of the actuators (10).

## Revendications

1. Procédé de réalisation automatique d'un tracé de profil de rouleau (5) sous préconisation d'un tracé de Profil de rouleau 2D ou 3D souhaite (5) changeant dans un sens d'avance du matériau de rouleau (X) et commande d'un dispositif de profilage de rouleau flexible dans lequel des rouleaux de profilage (11) peuvent être réglés par commande informatique pendant le processus de profilage de rouleaux, le procédé de réalisation du tracé de profil de rouleau 2D ou 3D optimisé (5) comprenant les points suivants:
a) saisie du tracé de profil de rouleau 2D ou 3D souhaité (5) au moyen d'auxiliaires de DAO, le tracé de profil de rouleau 2D ou 3D souhaité (5) étant composé d'une multitude de sections droites et/ou courbées et de transitions correspondantes ;
b) calcul du tracé de profil de rouleau 2D ou 3D optimiste (5) à partir du tracé de profil de rouleau 2D ou 3D saisi souhaité (5) par des algorithmes d'arrondi aux transitions entre les sections droites et/ou courbées afin de définir des arcs de transition respectifs aux transitions, les algorithmes d'arrondi arrondissant le tracé de profil de rouleau 2D ou 3D (5) essentiellement de manière constante sur la courbure au niveau des arcs de transition de sorte qu'est réalisé en conséquence le tracé de profil de rouleau 2D ou 3D optimisé (5) qui évite sensiblement les sauts de courbure dans ceux-ci ;
c) confirmation ou modification d'une partie du tracé de profil de rouleau 2D ou 3D optimisé (5) ; et
d) sauvegarde du tracé de profil de rouleau 2D ou 3D optimisé (5).

2. Procédé selon la revendications 1, dans lequel le tracé de profil de rouleau 2D ou 3D optimisé (5) en étape d) est utilisé pour commander un dispositif de profilage de rouleau flexible.

3. Procédé selon la revendication 1 ou 2, dans lequel la saisie effectuée en étape a) se fait par lecture d'un article de données ou d'un fichier de données comportant le tracé de profil de rouleau 2D ou 3D souhaité (5).

4. Procédé selon une des revendications précédentes, dans lequel, dans l'étape a), la saisie du tracé de profil de rouleau 2D ou 3D souhaité (5) a lieu dans le moyen auxiliaire de DAO sensiblement dans des sections droites et en arc de cercle et/ou des points qui créent une sections de courbe par une fonction, par exemple une fonction spline cubique.

5. Procédé selon une des revendications précédentes, dans lequel les étapes a) - c) de saisie pour le tracé de profil de rouleau 2D ou 3D souhaité (5) dans le moyen auxiliaire de DAO, pour le calcul du tracé de profil de rouleau 2D ou 3D optimisé (5), pour l'affichage du tracé de profil de rouleau 2D ou 3D entré et optimisé (5) et pour les modifications ou confirmations du tracé de profil de rouleau 2D ou 3D optimisé (5) ont lieu de manière à ce que, après une saisie partielle d'une section du tracé de profil de rouleau 2D ou 3D souhaité (5), les autres étapes b) -c) sont réalisées en effectuant un calcul d'optimisation, une édition ou un affichage et une modification du tracé de profil de rouleau 2D ou 3D partiel optimisé (5) et l'optimisation se fait par conséquent sensiblement de point à point ou de section de surface à section de surface.

6. Procédé selon une des revendications précédentes, dans lequel les saisies effectuées en étape a) comprennent aussi les écarts maximaux pour les calculs d'optimisation effectués en étape b), comme par exemple des rayons maximaux et/ou minimaux et/ou des écarts maximaux de segments droits ou courbés du profil de rouleau et/ou des positions de départ d'un calcul d'optimisation peuvent être indiquées.

7. Procédé selon une des revendications précédentes, dans lequel l'algorithme d'arrondi respectivement appliqué en étape b) peut être sélectionné globalement ou partiellement pour une certaine zone de surface dans une série d'algorithme d'arrondi.

8. Procédé selon une des revendications précédentes, dans lequel un algorithme d'arrondi à disposition ou utilisé en étape b) est basé sur le fait que, dans des zones du tracé de profil de rouleau 2D ou 3D (5), à partir d'une certaine modification de courbure ou accélération du tracé de profil de rouleau (5), comme par exemple entre une droite et une courbure en arc de cercle, deux courbures en arc de cercle différentes ou deux sections droites transitant en angle l'une dans l'autre, on ajoute dans le tracé de profil de rouleau 2D ou 3D (5) des arcs, de transition qui arrondissent son tracé de courbe de manière constante au niveau de la courbure.

9. Procédé selon la revendication 8, dans lequel, en étape b), les arcs de transition sont composés par calcul à partir finalement de nombreuses sections en arc de cercle à rayons différents de manière à ce que les points terminaux se chevauchent respectivement et qu'une augmentation ou une diminution échelonnée du rayon de courbure ne dépasse pas une limite définie et qu'on obtienne ainsi sensiblement un arrondi constant sur la courbure, ou
les arcs de transition sont établis par calcul en conséquence nous à partir finalement de nombreuses sections elliptiques de manière à ce que les points terminaux se chevauchent respectivement et qu'une augmentation ou une diminution échelonnée du rayon de courbure ne dépasse pas une limite définie et qu'on obtienne ainsi sensiblement un arrondi constant sur la courbure, ou
les arcs de transition sont basés sur un calcul correspondent et une adaptation d'une fonction ou de fonction combinées au tracé de profil de rouleau 2D ou 3D (5) souhaité, sachant qu'on utilise des fonctions comme les clothoïdes, sinusoïdes, paraboles cubiques, arcs simples, arcs de transition, arcs de Schramm, plusieurs courbes sinusoïdales superposées, les paraboles d'énième ordre ou en calculant et en appliquant un développement de série exponentielle d'une des formes de courbes précitées, ou
les arcs de transition et le tracé de profil de rouleau 2D ou 3D optimisé dans un premier niveau (5) sont en outre à nouveau optimisés à partir de signaux de capteurs qui affichent des forces d'accélération réelles se manifestant pendant une fabrication de ce tracé de profil de rouleau (5) des éléments de réglage (10), des zones de courbure du tracé de profil de rouleau (5) étant également modifiées en vue d'une séduction des forces des éléments de réglage.

10. Procédé selon une des revendications précédentes, dans lequel l'arc de transition calculé et appliqué en étape b) peut aussi remplacer une ou plusieurs sections de courbes globales et/où
l'algorithme d'arrondi disponible ou utilisé en étape b) intègre également dans le calcul des masses des rouleaux de profilage déplacés (11) et des éléments de réglage déplacés (10) et des forces d'accélération de maximale admissibles et se produisent pour les éléments de réglage (10) et/ou
l'algorithme d'arrondi disponible ou utilisé en étape b) intègre également dans le calcul la vitesse d'avance du matériau du rouleau ou
l'algorithme d'arrondi disponible ou utilisé en étape b) procèce en outre à un calcul d'optimisation de manière à obtenir une vitesse d'avance maximale du matériau de rouleau et/ou
l'algorithme d'arrondi disponible ou utilisé en étape b) effectue ou propose en outre un calcul d'optimisation ou d'arrondi du tracé de profil de rouleau souhaité (5) en vue d'une capacité de charge ou stabilité maximale d'une partie de profil de rouleau ainsi optimisé, la charge de la partie de profil de rouleau pouvant à cet effet également être indiquée.

11. Procédé selon une des revendications précédentes, dans lequel un tracé de profil de rouleau 2D ou 3D optimisé peut contenir également plusieurs tracés de profil de rouleau changeant le long de la brande de matériau de rouleau et qui sont respectivement optimisés suivant les étapes a) - c).

12. Dispositif de profilage de rouleau pour la réalisation d'un tracé de profil de rouleau 2D ou 3D optimisé (5) par un procédé selon une des revendications précédentes 1-11.

13. Dispositif de réalisation du tracé de profil de rouleau 2D ou 3D optimisé (5) selon une ou plusieurs des revendications précédentes 1-11, dans lequel le dispositif se présentant sous forme d'un appareil électronique présente de préférence une interface avec un dispositif de profilage de rouleaux de corriger d'interface flexible et/ou d'une interface destinée à recevoir des données qui contiennent le tracé de profil de rouleau 2D ou 3D souhaité (5).

14. Dispositif de profilage de rouleau selon la revendication 12 ou 13, dans lequel le dispositif de profilage de rouleau présente des capteurs pour déterminer des forces d'accélération et/ou des forces de réglage des éléments de réglage (10).
